# EUROPEAN PATENT APPLICATION

(11) **EP 3 419 243 A1**
(43) Date of publication of application: **26.12.2018**
(21) Application number: 17177382.3
(22) Date of filing: 22.06.2017
(51) Int. Cl.: H04L 29/06, H04M 3/42, H04M 3/54, H04Q 3/62

(54) **METHOD AND SYSTEM FOR REDIRECTING AN INCOMING PHONE CALL TO A USER DEVICE**

(71) Applicant: Rahman, Haider, 1230 Wien (AT)
(72) Inventor: Rahman, Haider, 1230 Wien (AT)
(74) Representative: Wildhack & Jellinek

(57) **Abstract**

Method for redirecting an incoming phone call to a user device (4a, 4b, 4c), comprising the steps of
a) using a plurality of predefined telephone numbers (A, B, C) of a telephone network (N)
b) using a connection database (20) comprising a plurality of user-entries (2a, 2b, 2c, 2d) each being associated with a user (a, b, c, d), wherein each of said user-entries (2a, 2b, 2c, 2d) comprises
- a **telephone number** (A, B, C) selected from the plurality of predefined telephone numbers (A, B, ...) for calling the user (a, b, c, d) from said telephone network (N), wherein at least two user-entries (2a, 2b, 2c, 2d) have the same associated telephone number (A, B, C),
- a plurality of **contact telephone numbers** representing contacts of the user (a, b, c, d) to be redirected to said user (a, b, c, d) if said user's (a, b, c, d) telephone number (A, B, C) is called, in particular taken from the phonebook of the user's (a, b, c, d) mobile device (4a, 4b, 4c),
- **connection information** for establishing a voice communication connection with a mobile user device (4a, 4b, 4c) and

c) receiving an incoming call from a caller (3x, 3y, 3z) using one of the telephone numbers (A, B, ...),
d) identifying within the connection database (20) a user-entry (2a, 2b, 2c, 2d) being associated with said telephone number (A, B, C) and containing the caller's (3x, 3y, 3z) caller-id (X, Y, Z) as a contact telephone number,
e) establishing a connection defined by the connection information of the user-entry (2a, 2b, 2c, 2d) identified in step d) with the user's mobile device (4a, 4b, 4c),
f) redirecting the phone call via said connection in order to establish a voice communication between the caller (3x, 3y, 3z) and the user (a, b, c, d) specified in the user-entry (2a, 2b, 2c, 2d).

## Description

The present invention relates to a method and a system for redirecting an incoming phone call to a user device and, in particular, to redirecting an incoming phone call to a user device by using a plurality of telephone connections and a connection database.

Various methods for routing of incoming calls to a telephone number associated with a user's device are known. A precondition for said routing methods is, however, that each telephone number is unique and therefore associated with only one user, which requires a large number of telephone lines. Direct inward dialling is frequently used to make multiple telephone numbers available over one analogue or digital physical circuit. In this case a dialled telephone number is transmitted to a private branch exchange system and assigned extensions are directly accessible for an outside caller. However direct inward dialling is only available in a limited number of countries. Accordingly, it is desirable to provide a method and a system to provide multiple telephone numbers over one analogue or digital physical circuit without the necessity of extensions.

According to a first aspect of the invention there is provided a method for redirecting an incoming phone call to a user device comprising the steps of
a) using a plurality of predefined telephone numbers of a telephone network
b) using a connection database comprising a plurality of user-entries each being associated with a user wherein each of said user-entries comprises
   - a **telephone number** selected from the plurality of predefined telephone numbers for calling the user from said telephone network, wherein at least two user-entries have the same associated telephone number
   - a plurality of **contact telephone numbers** representing contacts of the user to be redirected to said user if said user's telephone number is called, in particular taken from the phonebook of the user's mobile device,
   - **connection information** for establishing a voice communication connection with a mobile user device and
c) receiving an incoming call from a caller using one of the telephone numbers,
d) identifying within the connection database a user-entry being associated with said telephone number and containing the caller's caller-id as a contact telephone number,
e) establishing a connection defined by the connection information of the user-entry identified in step d) with the user's mobile device,
f) redirecting the phone call via said connection in order to establish a voice communication between the caller and the user specified in the user-entry.

In another advantageous embodiment of the invention that allows to assign one telephone number to multiple users, each of the user-entries in the connection database comprise an **extension**, wherein the combination of the telephone number and the extension is unique for the user, and
wherein in step d) of claim 1 if more than one user-entry is identified or no matching user-entry is identified, the following steps are performed:
i) requesting the caller to enter the extension, in particular via pushing a button of the caller's mobile device,
ii) identifying the extension entered by the caller, in particular via dual-tone multi-frequency signalling,
iii) redirecting the call to the user associated with a user-entry in the connection database containing the telephone number and the extension.

To facilitate selection of a user a caller using the invention intended to call, a method according to the invention is provided comprising the steps of:
- providing acoustic information to the caller, said acoustic information at least comprising one or more of the following:
   - a request to enter the respective extension,
   - the respective additional user extension of the identified user-entries,
   - the names of the users associated with the identified user-entries.

In order to provide a quick dialling option to a user of the invention, a method is provided comprising storing the extension entered by the caller as default caller redirection information associated with the caller's caller-id and the telephone number called by the caller and automatically redirecting the caller to the user according to the default caller redirection information, if a subsequent call of the caller using said telephone number is received.

To ensure that a user of the invention may also reject automatic redirection according to a quick dialling option, a method is provided comprising offering the caller the opportunity to reject automatic redirection, in particular via pushing a mobile phone's button, and detecting within a predefined time period, if automatic redirection is rejected, in particular via dual-tone multi-frequency signalling, and offering the caller to select a user as described above.

In another advantageous embodiment of the invention, a method is provided comprising updating the contact telephone numbers associated with a user upon creation, modification or deletion of an entry, in particular, in a user's phone book on the user's mobile device.

Another advantageous embodiment of the invention for assigning telephone numbers to new users comprises
a) registering a new user and creating a user-entry for said user via an application, in particular an application running on the user's mobile device,
b) transmitting the phone book of said new user and storing the telephone numbers of the phone book into the user's user-entry as contact telephone numbers,
c) selecting a unique combination of telephone number and additional user extension and storing said telephone number, said extension, and the new user's connection information in the user's user-entry.

To offer the possibility to a user to select the country or city or provider of a telephone number that shall be assigned to a user, a preferred embodiment of the invention provides that the telephone number to be assigned to the new user is selected from a subset of the available telephone numbers according to criteria specified by the new user, wherein the criteria may encompass a country and/or a city and/or a telephone service provider.

To avoid assigning the same telephone number to multiple users of the invention who share contacts, a method is provided wherein, when selecting the telephone number and additional user extension of the user, a predefined telephone number is not associated to a new user,
- if said predefined telephone number is already assigned to another user, who has at least one contact telephone number in common with said user, and
- if said common contact telephone number has the same country code and having the same country code as the telephone number to be assigned.

To avoid assigning the same telephone number to multiple users of the invention who share contacts, a method is provided wherein, when selecting the telephone number and additional user extension of the user, a predefined telephone number is not associated to a new user, if said predefined telephone number is already assigned to another user, who has at least one contact telephone number in common with said user.

In order to enable the user to enter telephone numbers, it can be provided, that additional telephone numbers to be stored in the new user's user-entry as contact telephone numbers are entered by said new user via a web-interface and/or an application.

To assign more than one telephone number to a user, a method according to the invention comprises
- a user already associated with a first user-entry requesting a second telephone number,
- creating a second user-entry associated with the same contact telephone numbers, preferably with the same connection information,
wherein when selecting the telephone number and additional user extension of the user, a predefined telephone number is not associated to the second user-entry, if said predefined telephone number is already assigned to the first user-entry of the same user.

The invention also relates to a system for redirecting an incoming phone call to a user device. Said system comprises
- a switching unit connected to a telephone network being associated with a plurality of **telephone numbers,**
- a **connection database** comprising a plurality of user-entries each being associated with a user, wherein each of said user-entries comprises
   - a **telephone number** selected from the plurality of predefined telephone numbers for calling the user from said telephone network, wherein at least two user-entries have the same associated telephone number,
   - a plurality of **contact telephone numbers** representing contacts of the user to be redirected to said user if said user's telephone number is called, in particular taken from the phonebook of the user's mobile device,
   - **connection information** for establishing a voice communication connection with a mobile user device
- wherein the switching unit is configured for
   - receiving an incoming call from a caller via one of the predefined telephone numbers,
- identifying within the connection database a user-entry containing the caller-id as a contact telephone number,
- establishing a connection defined by the connection information of the user-entry identified with the user's mobile device, and
- redirecting the phone call via said connection in order to establish a voice communication between the caller and the user specified in the user-entry.

A preferred embodiment of the invention that allows assignment of one telephone number to multiple users is characterized in that the each user-entry of the connection database comprises an **extension**, wherein the combination of the telephone number and the extension is unique for the user, and
wherein the switching unit is configured for
- detecting whether the connection database identifies more than one user-entry or no matching user-entry, and if this is the case:
   - requesting the caller to enter the extension, in particular via pushing a button of the caller's mobile device, and
   - identifying the extension entered by the caller, in particular via dual-tone multi-frequency signalling, and
   - redirecting the call to the user associated with a user-entry in the connection database containing the telephone number and the extension.

The following detailed description of preferred embodiments is merely exemplary in nature and is not intended to limit the invention or the application and uses of the invention. The invention will be described with reference to the following figures, which are provided by way of explanation only, in which:
**Fig. 1** shows a schematic depiction of a telephone network according to the invention.
**Fig. 2a to 2e** show different scenarios of a connection database comprising a plurality of user-entries.

### Voice communication network

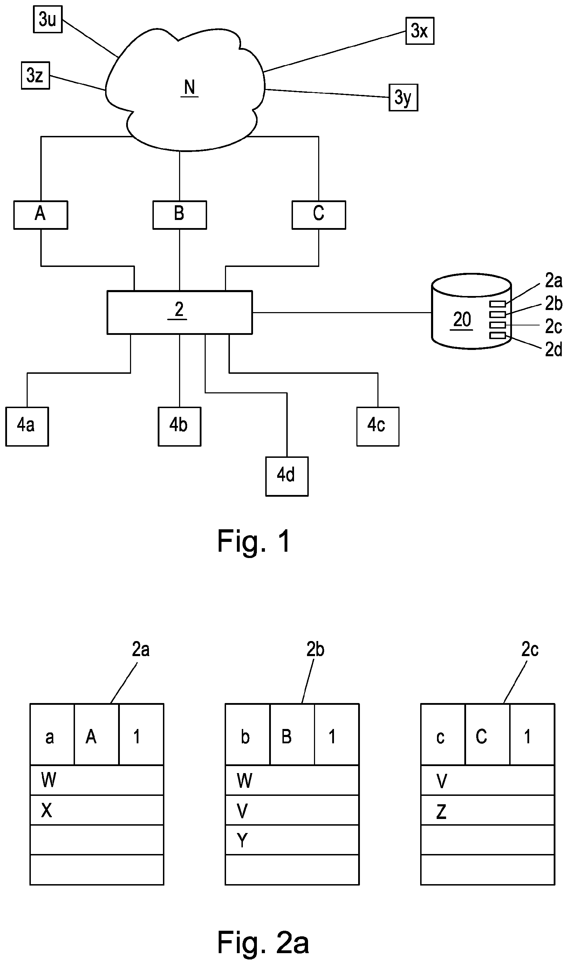

**Fig. 1** schematically shows a telephone network N with a plurality of callers 3x, 3y, 3z and a switching unit 2. The switching unit 2 is connected to a connection database 20 and a plurality of telephone numbers A, B, C within a telephone network N. The switching unit 2 is configured to establish a voice communication connection from a caller 3x, 3y, 3z via the telephone network N and using one of the telephone numbers A, B, C.

The switching unit 2 is further connected to a plurality of, in particular mobile, user devices 4a, 4b, 4c, wherein each of the user devices 4a, 4b, 4c may be addressed via different voice communication protocols such as the telephone network N, a voice over IP connection etc. The switching unit 2 is also able to establish a voice communication connection to the user devices 4a, 4b, 4c via different communication protocols.

Moreover, the switching unit 2 is able to redirect a phone call from a caller 3x, 3y, 3z to one of the user devices 4a, 4b, 4c using the above voice communication connections. In order to select the user 4a, 4b, 4c for an incoming call of a caller 3x, 3y, 3z during operation the switching unit 2 is also configured to access the connection database 20.

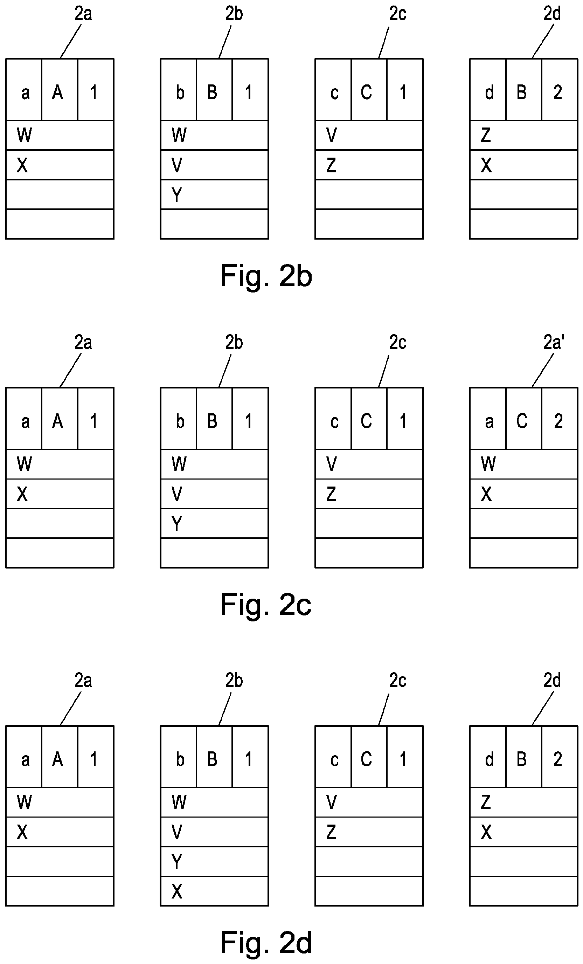

The connection database 20 comprises a plurality of user-entries 2a, 2b, 2c, 2d, each being associated with a user a, b, c, d and a telephone number A, B, C for calling the user a, b, c, d from a telephone network N (**Fig. 2a****,** **2b, 2c**). Typically, at least two user-entries 2a, 2b, 2c, 2d have the same associated telephone number A, B, C, this means, that one telephone number A, B, C may be assigned to a plurality of users.

Each of the user-entries 2a, 2b, 2c, 2d of the connection database 20 furthermore comprises connection information for establishing a voice communication connection with the respective user device 4a, 4b, 4c, in particular with a mobile user device 4a, 4b, 4c. This connection information may, e.g. comprise IP data or an external telephone number for use in a telephone network.

Each of the user-entries 2a, 2b, 2c, 2d of the connection database 20 also contains a plurality of contact telephone numbers, in particular representing contacts of the user a, b, c, d to be redirected to said user a, b, c, d if said user's a, b, c, d telephone number A, B, C, ... is called. These contact telephone numbers may be received, as described above, in particular from the phone book of the user's device 4a, 4b, 4c.

Alternatively, said contact telephone numbers can also be entered via a mobile application or a web-interface manually. In particular, the mobile application may be used in order to contact a potential caller via contacting his phone number. Said phone number is then entered as contact telephone number in the user-entry of the connection database 20.

### Database and registration

**Fig. 2a** schematically shows a plurality of user-entries 2a, 2b, 2c of a connection database 20. Each of the user-entries 2a, 2b, 2c is associated with a user a, b, c and further comprises a telephone number A, B, C, ... for calling the respective user a, b, c via the telephone network N. In general - and in contrast to this very simple and illustrative example - telephone numbers A, B, C are typically assigned to a plurality of users a, b, c.

In the following example the assignment of a telephone number and extension to a new user d is demonstrated. Before the registration of said new user d the connection database 20 already contains user-entries 2a, 2b, 2c for registered users a, b, c.

The user-entry 2a of user a was assigned telephone number A and the extension 1. The user-entry 2a moreover contains two contact telephone numbers W, X as well as connection information to contact the device of user a.

The user-entry 2b of user b was assigned telephone number B and the extension 1. The user-entry 2b moreover contains three contact telephone numbers W, V, Y as well as connection information to contact the device of user b.

The user-entry 2c of user c was assigned telephone number C and the extension 1. The user-entry 2c moreover contains two contact telephone numbers V, Z as well as connection information to contact the device of user c.

As can be seen from **Fig. 2a****,** the user-entries 2a, 2b, 2c the combination of the telephone number A, B, C and the extension is unique for a user-entry 2a, 2b, 2c.
With regard to **Fig. 2b** the process of registration of a new user d is shown. Upon registering with the new user d the contact telephone numbers Z, X of the phone book of the user's d mobile device's 4d local phone book are transferred to the connection database 20. Alternatively, contact telephone numbers of user d may also be entered via a web-interface and/or a mobile application.

As a first step of the assignment process, a user-entry 2d of the connection database 20 is created for the new user d, in particular said user-entry 2d being assigned a unique id. The user-entry 2d is assigned connection information for establishing a voice communication connection with user's d mobile user device 4d. Said connection information may for instance be a telephone number for calling the mobile user device 4d or an IP-address for calling via voice-over-IP.

Each of the users a, b, c, d may choose between different voice communication methods and provide information on how to identify his user device 4a, 4b, 4c, 4d using said communication method. As an example user a may chose to be contacted via PSTN-call and provides his telephone number. User b may chose to be contacted via voice over IP, wherein user's b mobile device 4b provides an IP-Address etc.

In general, available telephone numbers A, B, C shall be assigned to the users a, b, c, d in a manner, so that the number of users a, b, c, d assigned to telephone number A, B, C is almost equal. To achieve this goal, it is possible to define a predefined order or sequence of the telephone numbers, e.g. A, B, C, wherein the first user is assigned telephone number A, the second user is assigned telephone number B, the third user is assigned telephone number C, the fourth user is again assigned telephone number A, etc.

In order to assign a unique combination of a predefined telephone number A, B, ... and an extension to the new user-entry 2d, the following rules for rejecting the assignment of a telephone number have to be fulfilled. If a telephone number A, B, ... is rejected, the user d is assigned the next telephone number A, B, ... in the sequence as defined above.

First, a predefined telephone number A, B, ... is not assigned to the new user-entry 2d, if said telephone number A, B, ... is already assigned to another user a, b, c who has at least one contact telephone number in common with said new user d.

Within the scenario **Fig. 2b****,** one cannot assign the telephone number A to the new user-entry 2d, because there is already an existing user-entry 2a being associated with number A having a contact number X that is also a contact number of the new user-entry 2d. Moreover, one cannot assign the telephone number C to the new user d, because the contact telephone number Z of the user c is in the new user's d phone book.

Therefore, in this case the user-entry 2d is assigned the telephone number B (**Fig. 2b**). In order to have a unique combination of telephone number C and extension, it should be avoided to assign the extension "1" to user-entry 2d. As shown in **Fig. 2b** extension "2" is assigned to user-entry 2d.

It is also possible that a user a already associated with a first user-entry 2a sends a request for a second telephone number A, B, C to the connection database 20. Starting from the scenario as shown in **Fig. 2a**, the connection database 20 creates a second user-entry 2a' associated with the same contact telephone numbers, preferably with the same connection information, for said user a. When assigning one of the predefined telephone numbers A, B,... , one has to make sure that the telephone numbers of the user's a first user entry 2a and the user's second user-entry 2a' are not the same.

In this case the user-entry 2a' is not assigned telephone number "A" in order to avoid that both user-entries 2a, 2a' have the same telephone number. Moreover user-entry 2a' is not assigned telephone number "B" to avoid common contact telephone number "W" with user 2b. Therefore user-entry 2a' is assigned telephone number "C". In order to obtain a unique combination of telephone number and extension the user-entry 2a' is assigned extension "2" (**Fig. 2c**).

During operation of the system the contact telephone numbers associated with a user a, b, c, d are synchronized with the local user's phone books of the mobile devices 4a, 4b, 4c, 4d. In particular a local application running on the mobile devices 4a, 4b, 4c, 4d is triggered upon creation, modification or deletion of an entry of a user's a, b, c, d phone book. The application sends creation requests, modification requests or deletion requests to the connection database 20. The connection database 20 updates the contact telephone numbers of the user-entry 2a, 2b, 2c, 2d associated with the user a, b, c, d.

Alternatively, it might also be possible to ignore deletion requests in order to avoid deletion of the user's a, b, c, d contact telephone numbers upon unintended deletion of the telephone book of the user's a, b, c, d mobile device 4a, 4b, 4c.

As an example, starting from the scenario of **Fig. 2b**, user B enters the number X of a caller 3x into his local phone book. A local application is triggered upon entering the number X and sends a creation message to the connection database 20. The connection database 20 receives the creation message and enters the number X into the user-entry 2b of user B. The result of this amendment of the connection database 20 can be seen in **Fig. 2d****.**

In all of the above cases, the user a, b, c, d is informed about the assigned telephone number A, B, C and extension. If the user a, b, c, d wishes to be called by a caller 3x, 3y, 3z, the user a, b, c, d passes his telephone number A, B, C and the extension to the caller 3x, 3y, 3z.

### Country-specific handling

The telephone number A, B, C, ... to be assigned to a new user d may also be selected from a subset of available telephone numbers A, B, C, ... according to criteria specified by the new user d. The new user d may, for instance, receive a telephone number A, B, C, ... corresponding to a country and/or a city and/or a telephone service provider selected by the new user d.

In many cases it is not necessary to exclude two users a, b, c, d from having the same telephone number A, B, C, just because of having one contact telephone number in common. Especially if a new user a, b, c, d selects a telephone number A, B, C, the assignment of the same telephone number A, B, C which is already assigned to another user a, b, c who has common contacts, only needs to be rejected, if the common contact telephone number identified also has the same country code of the selected new telephone number A, B or C.

Given that users a, b, c, d shall be assigned telephone numbers A, B, C of a specific country, for instance Pakistan, and those users a, b, c, d shall only be contacted from Pakistan via the telephone number A, B, C to be assigned, common contact telephone numbers with other country specific prefixes shall not prohibit the assignment of a common telephone number.

In general a predefined telephone number A, B, ... is prohibited to be associated to a new user d, if the following conditions are fulfilled.
First, said predefined telephone number A, B, ... that shall be assigned to the new user d is already assigned to another user a, b, c, who has at least one contact telephone number in common with said user d.

Second, said common contact telephone number has the same country-code, and having the same country code as the telephone number A, B, ... to be assigned.

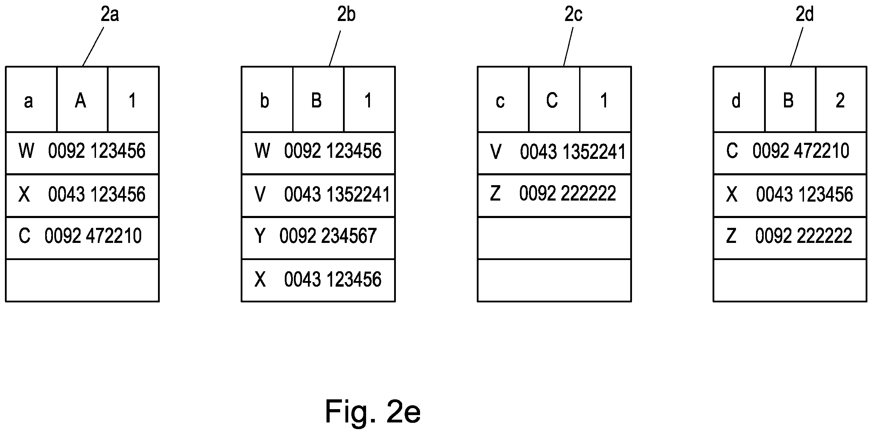

With reference to **Fig. 2e** the new user d wishes to be assigned a Pakistani telephone number. For this example, telephone numbers A, B, C are all Pakistani telephone numbers having the country code "0092".

New user d may be assigned telephone number B, even if he has one non-Pakistani contact telephone number X "0043 1352241" in common with user b, because the common contact telephone number X does not have the same - Pakistani - country code but an Austrian prefix "0043".

In contrast, telephone number C may not be assigned to the new user d, because user c, who is already assigned telephone number C, has one common contact telephone number Z "0092 222222" having a Pakistani prefix "0092".

Moreover, also telephone number A may not be assigned to new user d, because user a, who is already assigned telephone number A, has one common contact telephone number C "0092 472210" having a Pakistani prefix "0092".

### incoming call handling

### Regular case

When - in the scenario of **Fig. 2d** - an incoming call from a caller 3y is received, the switching unit 2 identifies the telephone number B which was called by the caller 3y and the caller's 3y caller-id Y that was sent by the caller 3y. When receiving a call from 3y via the telephone number B and receiving the caller-id Y, a user-entry 2b associated with the telephone number B containing the caller's 3y caller-id or telephone number Y as a contact telephone number within the connection database 20 is identified.

If only one user-entry 2b containing said telephone number B and the caller's 3y caller-id Y as a contact telephone number is identified, a connection with the user's c device 4b is established as defined by the connection information included in the identified user-entry 2b. Finally the phone call is redirected via said connection in order to establish a voice communication between the caller 3y and the user b.

Even if the caller 3y knows the extension of user b, there is no need for the caller 3y to enter the extension to the switching unit 2.

### Multiple potential users

Even if the number assignment on registration initially ensures that only one user-entry 2a, 2b, 2c, 2d is identified, the synchronization of the local phone book with the contact telephone numbers in the connection database 20 allows upon a caller's 3x, 3y, 3z call that no user-entry 2a, 2b, 2c, 2d or multiple user-entries 2a, 2b, 2c, 2d are identified by the connection database 20.

Assume, for instance within the scenario of **Fig. 2d**, a first call is received from caller 3x via telephone number B, caller 3x sending his telephone number X as caller-id. In a first step the connection database 20 is searched for user-entries 2a, 2b, 2c, 2d that are associated with the telephone number B. Therefore the user-entries 2a, 2c of users a, c can be excluded.

In a second step the connection database 20 searches - among the remaining user-entries 2b, 2d - for user-entries that contain the caller's 3x telephone number X within their contact telephone numbers. As can be seen from **Fig. 2d**, both user-entries 2b, 2d fulfil the above criterion, so that finally both user-entries 2b, 2d can be identified.

In case of multiple identified user-entries 2b, 2d, in particular associated with multiple users b, d, the caller 3x is requested to enter the extension of the intended user, in particular via pushing a button of the caller's 3x device. An interactive voice system may be used to provide said acoustic information and action requests to the caller 3x.

The acoustic information may include:
- the names of the remaining identified users b, d associated with the identified user-entries 2b, 2d
- the respective extension of the users b, d the caller 3x potentially intended to call as contained in the connection database 20, and
- a request to enter the respective extension of the intended identified users.

In this very simple example the interactive voice response system sends a voice text message to the caller 3x, for instance as follows, "For calling b please push 1. For calling d please push 2."

As it may not be allowable in some countries to inform the caller 3x about the name of the potential users b, d directly, it is also possible that the caller 3x is only informed about the extension of the users b, d associated with the identified user-entries 2b, 2d, for instance like this, "Please enter the extension of the user you wish to call. Please push 1 or 2." It is also possible that the caller 3x is not informed about any user-details at all, "Please enter the extension of the user you wish to call."

The caller 3x, who wishes to talk to d, pushes the button "2" on his mobile phone which causes the mobile phone to send a tone-signal to the switching unit 2. The extension entered by the caller 3x is identified, in particular via dual-tone multi-frequency signalling, and used to identify the intended user d. The connection database 20 selects among the identified user-entries 2b, 2d the entry that is assigned the extension "2" provided by the caller 3x and finally identifies the user-entry 2d. The connection information of this user-entry 2d is passed to the switching unit 2d.

Once the intended user is identified, the switching unit 2 establishes a connection defined by the connection information of the user-entry 2d with the user's mobile device 4d. For establishing the connection the switching unit 2 uses the connection information of the user-entry 2d. The call is redirected to the intended user d via said connection, so that the caller 3x can talk to user d.

### Default user management and memorizing caller behaviour

Even if the number of potential users a, b, c, d for redirecting of an incoming call can not be reduced to one single user a, b, c, d, in most cases the history of former redirected calls can be used to estimate the user a, b, c, d to which the call can be redirected. In the following a preferable modification of the invention providing a quick-dialling mode is described in detail based on the scenario of **Fig. 2d****.**

In the above case, caller 3x calls user d several times. The connection database 20 is added the following data record as a default redirection entry:
- the caller 3x, in particular the telephone number X of the caller 3x, and
- the extension "2", and
- the telephone number B called by the caller 3x.

The combination of extension "2" and telephone number B uniquely identify user d as default user for calls of caller 3x via telephone number B.

Such a default redirection entry can be created when the caller 3x enters the extension for the first time. It is, however, also possible that the connection database 20 requires the caller 3x to call the same telephone number using the same extension for, e.g. three times, in order to create a default redirection entry.

If the caller 3x calls the telephone number B and a default redirection entry is available in the connection database 20, the switching unit 2 automatically redirects the caller 3x to the user d according to the default caller redirection information without asking the caller 3x to enter the extension again. Once a subsequent call from the caller's 3x telephone number is received, the switching unit 2 sends a voice message. After said voice message the caller 3x is automatically redirected to user d.

### Rejection of automatic redirection

However, in some cases the caller 3x might wish to talk to user b and not to user d, who is registered within the default redirection information. In order to offer the caller 3x the opportunity to reject or cancel the automatic redirection and select user b for a phone call, the caller 3x is informed that he is redirected to the user according to the default redirection entry, unless he pushes a specific phone button, e.g. the '#'-button or he performs any other activity that can be recognized by the switching unit 2, e.g. by entering the extension of the user.

The switching unit 2 detects within said predefined time period, whether automatic redirection is rejected, in particular via dual-tone multi-frequency signalling. If rejection of automatic redirection is detected within a predefined time period, in particular via dual-tone multi-frequency signalling, the caller 3x is offered to select a user b, d by entering the extension of the intended user b, d.

Assume caller 3x intends to call user b and thus pushes a button for cancellation of automatic redirection, for instance '#' on his telephone. Rejection of automatic redirection to user d is detected within a predefined time period, in particular via dual-tone multi-frequency signalling, and caller 3x may hear a voice message containing the names and extensions of users b, d associated with the user entries 2b, 2d matching the criteria described above and requesting caller 3x to select a user b, d via entering the extension of the user b, d.

In this case, caller 3x enters the extension "1" of user b by pushing a button on his device. The switching unit 2 receives the respective acoustic signal, via dual-tone multi-frequency signalling and identifies the user b addressed by the button pushed. The switching unit 2 establishes a connection to user b and redirects the phone call via said connection in order to establish a voice communication between the caller 3x and the user b.

### No potential users

Of course, the connection database 20 may possibly contain no user-entry 2a, 2b, 2c, 2d containing both
- a caller's 3x, 3y, 3z telephone number as a contact telephone number and
- the telephone number A, B, C the caller 3x, 3y, 3z called.

For instance within the scenario of **Fig. 2b** caller 3u calls the telephone number B. None of the users having caller 3u as a contact telephone number are assigned telephone number B. In this case, the caller 3u is asked to select an extension identifying the intended user b or d as described above.

## Claims

1. Method for redirecting an incoming phone call to a user device (4a, 4b, 4c), comprising the steps of
a) using a plurality of predefined telephone numbers (A, B, C) of a telephone network (N)
b) using a connection database (20) comprising a plurality of user-entries (2a, 2b, 2c, 2d) each being associated with a user (a, b, c, d), wherein each of said user-entries (2a, 2b, 2c, 2d) comprises
- a **telephone number** (A, B, C) selected from the plurality of predefined telephone numbers (A, B, ... ) for calling the user (a, b, c, d) from said telephone network (N), wherein at least two user-entries (2a, 2b, 2c, 2d) have the same associated telephone number (A, B, C),
- a plurality of **contact telephone numbers** representing contacts of the user (a, b, c, d) to be redirected to said user (a, b, c, d) if said user's (a, b, c, d) telephone number (A, B, C) is called, in particular taken from the phonebook of the user's (a, b, c, d) mobile device (4a, 4b, 4c),
- **connection information** for establishing a voice communication connection with a mobile user device (4a, 4b, 4c) and
c) receiving an incoming call from a caller (3x, 3y, 3z) using one of the telephone numbers (A, B, ...),
d) identifying within the connection database (20) a user-entry (2a, 2b, 2c, 2d) being associated with said telephone number (A, B, C) and containing the caller's (3x, 3y, 3z) caller-id (X, Y, Z) as a contact telephone number,
e) establishing a connection defined by the connection information of the user-entry (2a, 2b, 2c, 2d) identified in step d) with the user's mobile device (4a, 4b, 4c),
f) redirecting the phone call via said connection in order to establish a voice communication between the caller (3x, 3y, 3z) and the user (a, b, c, d) specified in the user-entry (2a, 2b, 2c, 2d).

2. Method according to claim 1, wherein each of the user-entries (2a, 2b, 2c, 2d) in the connection database (20) comprise an **extension**, wherein the combination of the telephone number (A, B, C) and the extension is unique for the user (a, b, c, d), and wherein in step d) of claim 1 if more than one user-entry (2a, 2b, 2c, 2d) is identified or no matching user-entry (2a, 2b, 2c, 2d) is identified, the following steps are performed:
i) requesting the caller (3x, 3y, 3z) to enter the extension, in particular via pushing a button of the caller's (3x, 3y, 3z) mobile device,
ii) identifying the extension entered by the caller (3x, 3y, 3z), in particular via dual-tone multi-frequency signalling,
iii) redirecting the call to the user (a, b, c, d) associated with a user-entry (2a, 2b, 2c, 2d) in the connection database (20) containing the telephone number (A, B, C) and the extension.

3. Method according to claim 2, comprising:
providing acoustic information to the caller (3x, 3y, 3z), said acoustic information at least comprising one or more of the following:
- a request to enter the respective extension,
- the respective additional user extension of the identified user-entries (2a, 2b, 2c, 2d),
- the names of the users (a, b, c, d) associated with the identified user-entries (2a, 2b, 2c, 2d).

4. Method according to claim 2 or 3, comprising:
storing the extension entered by the caller (3x, 3y, 3z) as default caller redirection information associated with the caller's (3x, 3y, 3z) caller-id (X, Y, Z) and the telephone number (A, B, C) called by the caller (3x, 3y, 3z), and
automatically redirecting the caller (3x, 3y, 3z) to the user (a, b, c, d) according to the default caller redirection information, if a subsequent call of the caller (3x, 3y, 3z) using said telephone number (A, B, C) is received.

5. Method according to claim 4, comprising:
offering the caller (3x, 3y, 3z) the opportunity to reject automatic redirection, in particular via pushing a mobile phone's button,
detecting within a predefined time period, if automatic redirection is rejected, in particular via dual-tone multi-frequency signalling, and offering the caller (3x, 3y, 3z) to select a user (a, b, c, d) according to steps i) to iii) of claim 2.

6. Method according to any preceding claim, comprising updating the contact telephone numbers associated with a user (a, b, c, d) upon creation, modification or deletion of an entry (2a, 2b, 2c, 2d), in particular, in a user's (a, b, c, d) phone book on the user's (a, b, c, d) mobile device (4a, 4b, 4c).

7. Method according to any of the preceding claims, comprising the steps of
a) registering a new user (a, b, c, d) and creating a user-entry (2a, 2b, 2c, 2d) for said user (a, b, c, d) via an application, in particular an application running on the user's (a, b, c, d) mobile device (4a, 4b, 4c),
b) transmitting the phone book of said new user (a, b, c, d) and storing the telephone numbers of the phone book into the user's (a, b, c, d) user-entry (2a, 2b, 2c, 2d) as contact telephone numbers,
c) selecting a unique combination of telephone number (A, B, C) and additional user extension and storing said telephone number (A, B, C), said extension, and the new user's (a, b, c, d) connection information in the user's user-entry (2a, 2b, 2c, 2d).

8. A method according to claim 7, wherein the telephone number (A, B, C) to be assigned to the new user (a, b, c, d) is selected from a subset of the available telephone numbers according to criteria specified by the new user (a, b, c, d), wherein the criteria may encompass a country and/or a city and/or a telephone service provider.

9. A method according to claim 8, wherein in step c) of claim 7 a predefined telephone number (A, B, C) is not associated to a new user (a, b, c, d),
- if said predefined telephone number (A, B, C) is already assigned to another user (a, b, c, d), who has at least one contact telephone number in common with said user (a, b, c, d), and
- if said common contact telephone number has the same country code and having the same country code as the telephone number (A, B, C) to be assigned.

10. A method according to claim 7 or 8, wherein in step c) of claim 7 a predefined telephone number (A, B, C) is not associated to a new user (a, b, c, d), if said predefined telephone number (A, B, C) is already assigned to another user (a, b, c, d), who has at least one contact telephone number in common with said user (a, b, c, d).

11. A method according to any of claims 7 to 10, wherein in step b) of claim 7 additional telephone numbers (A, B, C) to be stored in the new user's (a, b, c, d) user-entry (2a, 2b, 2c, 2d) as contact telephone numbers are entered by said new user (a, b, c, d) via a web-interface and/or an application,
In particular, the mobile application may be used in order to contact a potential caller via contacting his phone number, wherein said phone number is then entered as contact telephone number in the user-entry of the connection database (20).

12. A method according to any of claims 7 to 11, comprising the steps of:
- a user (a, b, c, d) already associated with a first user-entry (2a, 2b, 2c, 2d) requesting a second telephone number (A, B, C),
- creating a second user-entry (2a, 2b, 2c, 2d) associated with the same contact telephone numbers, preferably with the same connection information,
- wherein in step c) of claim 7 a predefined telephone number (A, B, C) is not associated to the second user-entry (2a'), if said predefined telephone number (A, B, C) is already assigned to the first user-entry (2a) of the same user (a).

13. System for redirecting an incoming phone call to a user device, comprising
- a switching unit (2) connected to a telephone network (N) being associated with a plurality of **telephone numbers** (A, B, ...)
- a **connection database** (20) comprising a plurality of user-entries (2a, 2b, 2c, 2d) each being associated to a user (a, b, c, d), wherein each of said user-entries (2a, 2b, 2c, 2d) comprises
- a **telephone number** (A, B, C) selected from the plurality of predefined telephone numbers (A, B, ... ) for calling the user (a, b, c, d) from said telephone network (N), wherein at least two user-entries (2a, 2b, 2c, 2d) have the same associated telephone number (A, B, C),
- a plurality of **contact telephone numbers** representing contacts of the user (a, b, c, d) to be redirected to said user (a, b, c, d) if said user's (a, b, c, d) telephone number (A, B, C) is called, in particular taken from the phonebook of the user's mobile device (4a, 4b, 4c),
- **connection information** for establishing a voice communication connection with a mobile user device (4a, 4b, 4c)
- wherein the switching unit (2) is configured for
- receiving an incoming call from a caller (3x, 3y, 3z) via one of the predefined telephone numbers (A, B, ...),
- identifying within the connection database (20) a user-entry (2a, 2b, 2c, 2d) containing the caller's (3x, 3y, 3z) caller-id (X, Y, Z) as a contact telephone number,
- establishing a connection defined by the connection information of the user-entry (2a, 2b, 2c, 2d) identified with the user's mobile device (4a, 4b, 4c), and
- redirecting the phone call via said connection in order to establish a voice communication between the caller (3x, 3y, 3z) and the user (a, b, c, d) specified in the user-entry (2a, 2b, 2c, 2d).

14. System according to claim 13, wherein the each user-entry (2a, 2b, 2c, 2d) of the connection database (20) comprises an **extension**, wherein the combination of the telephone number (A, B, C) and the extension is unique for the user (a, b, c, d), and wherein the switching unit (2) is configured for
- detecting whether the connection database (20) identifies more than one user-entry (2a, 2b, 2c, 2d) or no matching user-entry (2a, 2b, 2c, 2d), and
- if this is the case:
- requesting the caller (3x, 3y, 3z) to enter the extension, in particular via pushing a button of the caller's mobile device, and
- identifying the extension entered by the caller (3x, 3y, 3z), in particular via dual-tone multi-frequency signalling, and
- redirecting the call to the user (a, b, c, d) associated with a user-entry (2a, 2b, 2c, 2d) in the connection database (20) containing the telephone number (A, B, C) and the extension.
